# EUROPÄISCHE PATENTSCHRIFT

(11) **EP 3 507 247 B1**
(45) Veröffentlichungstag und Bekanntmachung des Hinweises auf die Patenterteilung: **24.06.2020**
(21) Anmeldenummer: 17768012.1
(22) Anmeldetag: 29.08.2017
(51) Int. Cl.: C02F 1/00, C02F 1/42, C02F 1/68, B01J 39/07, C02F 1/66, B01J 39/10

(54) **VORRICHTUNG UND VERFAHREN ZUR AUFBEREITUNG VON TRINKWASSER SOWIE VERFAHREN ZUR BELADUNG EINES IONENAUSTAUSCHERMATERIALS MIT ZINKIONEN**
DEVICE AND METHOD FOR TREATING DRINKING WATER AND METHOD OF LOADING AN ION EXCHANGE MATERIAL WITH ZINC IONS
DISPOSITIF ET PROCÉDÉ POUR LE TRAITEMENT DE L'EAU POTABLE; PROCÉDÉ POUR CHARGER UN ÉCHANGEUR D'IONS AVEC DES IONS DE ZINC

(30) Priorität: 30.08.2016 DE 102016116140
(43) Veröffentlichungstag der Anmeldung: 10.07.2019
(73) Patentinhaber: BWT AG, 5310 Mondsee (AT)
(72) Erfinder: JOHANN, Jürgen, 69226 Nussloch (DE); SCHROTSHAMER, Sabrina, 5301 Eugendorf (AT)
(74) Vertreter: Friderichs, Gunther
(86) Internationale Anmeldenummer: PCT/EP2017/071633
(87) Internationale Veröffentlichungsnummer: WO 2018/041817

(56) Entgegenhaltungen:
- WO-A1-2013/153069
- US-A1- 2013 306 541
- US-B1- 6 558 547

## Beschreibung

### Gebiet der Erfindung

Die Erfindung betrifft eine Vorrichtung und ein Verfahren zur Aufbereitung von Trinkwasser. Insbesondere betrifft die Erfindung eine Vorrichtung und ein Verfahren, bei welchem ein Ionenaustauschermaterial verwendet wird, das von dem aufzubereitenden Wasser durchströmt wird, wobei Ionen des Trinkwassers, insbesondere Kalziumionen, durch andere Ionen ausgetauscht werden. Die Erfindung betrifft insbesondere schwerkraftbetriebene Tischwasserfilter, Filterkartuschen für Maschinen zur Getränkezubereitung sowie Filterkerzen, die inline in eine Wasserleitung eingesetzt werden. Die Erfindung betrifft des Weiteren ein Verfahren zur Beladung eines Ionenaustauschermaterials mit Zinkionen.

### Hintergrund der Erfindung

Vorrichtungen zur Aufbereitung von Trinkwasser sind bekannt. Insbesondere werden zur Aufbereitung und gleichzeitigen Enthärtung von Trinkwasser Filterkartuschen oder Filterkerzen verwendet, die mit einem Ionenaustauschermaterial befüllt sind, welches mit Wasserstoff beladen ist. Ein derartiges, mit Wasserstoff beladenes Filtermaterial, insbesondere ausgebildet als schwach saures Ionenaustauscherharz, hat eine hohe Selektivität gegenüber anderen Ionenarten und ist daher insbesondere gut für die Enthärtung des aufzubereitenden Wassers geeignet.

Nachteilig ist, dass bei derartigen, mit Wasserstoff beladenen Filterkartuschen auch andere Spurenelemente, welche insbesondere für die menschliche Ernährung wichtig sind, entfernt werden, obwohl deren Entfernung zur Enthärtung des Wassers nicht erforderlich ist. Dies betrifft insbesondere auch Zink.

Zink ist ein wichtiges Spurenelement des Körpers. Zink ist an ca. 300 enzymatischen Reaktionen im Körper beteiligt. Zinkmangel kann zahlreiche Folgen haben, z.B. Haarausfall, rissige und trockene Haut, Hautentzündungen, brüchige Haare und Nägel, verminderte Wundheilung und Hautentzündungen, bei Kindern Wachstumsstörungen, Appetitlosigkeit, Nachtblindheit, Schwächung des Immunsystems und eingeschränkte Leistungsfähigkeit.

Die Zuführung von Zink muss täglich mit der Nahrung oder über das Trinkwasser erfolgen, da der Körper Zink nicht selbst herstellen kann. Die empfohlene Tagesmenge an Zink sollte 10 bis 15 mg pro Tag betragen.

Zinkreiche Nahrungsmittel sind Rindfleisch, Seefisch und Meeresfrüchte. Darüber hinaus enthalten ist Zink in Mischprodukte, vor allem Käse, Eier sowie Vollkornerzeugnissen. Das zinkreichste Lebensmittel ist mit großem Abstand die Auster. Danach folgen Rindfleisch, Seefisch und Meeresfrüchte, Milcherzeugnisse (vor allem Käse), Eier und Vollkornerzeugnisse. Zink aus tierischen Lebensmitteln ist besser verwertbar - mehr als die Hälfte der mittleren Tagesaufnahme an Zink wird aus Nahrungsmitteln tierischer Herkunft gedeckt. Auch die Verarbeitung hat einen Einfluss auf den Zinkgehalt der Lebensmittel - so ist der Ausmahlungsgrad von Getreide entscheidend für den Zinkgehalt von Mehl. Zink ist außerdem noch enthalten in Nüssen, Linsen, Haferflocken etc. Bei Zinkmangel wird unter anderem auch die Einnahme von Zinkpräparaten, vor allem Tabletten mit Zink meist in Kombination mit Vitamin C empfohlen.

Zink wird meist gar nicht über das Trinkwasser aufgenommen. Meist ist die Konzentration von Zink im Trinkwasser verschwindend gering.

Die Dosierung von Zink mittels eines Dosiersystems hat den Nachteil das die Zinkionen immer mittels eines Salzes dosiert werden müssen. Als Anionen werden u.a. Citrate eingesetzt. In der US 6 558 547 B1 wird ein mit Zinkionen beladener Ionenaustauscher beschrieben.

### Aufgabe der Erfindung

Der Erfindung liegt demgegenüber die Aufgabe zugrunde, die genannten Nachteile des Standes der Technik zu reduzieren. Es ist insbesondere Aufgabe der Erfindung, ein aufbereitetes Trinkwasser mit einem hinreichend hohen Zinkanteil bereitzustellen.

### Zusammenfassung der Erfindung

Die Aufgabe der Erfindung wird durch eine Vorrichtung und ein Verfahren zur Aufbereitung von Trinkwasser sowie durch ein Verfahren zur Beladung eines Ionenaustauschermaterials mit Zinkionen nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Vorrichtung zur Aufbereitung von Trinkwasser, welche ein Gehäuse umfasst, durch welches Wasser leitbar ist.

Die Erfindung betrifft insbesondere eine Vorrichtung, welche als vorzugsweise werkzeuglos austauschbare Kartusche oder welche als Filterkerze ausgebildet ist. Die Kartusche mit einem Einlauf und einem Auslauf kann insbesondere in einem schwerkraftbetriebenen Tischwasserfilter verwendet werden. Eine andere Ausführungsform wird für Maschinen zur Zubereitung von Heißgetränken verwendet, indem diese beispielsweise vor den Ansaugstutzen des Tanks gesetzt wird. Sofern die Vorrichtung als Filterkerze ausgebildet ist, wird diese in einen Leitungsabschnitt eingebaut und vom Wasser durchströmt.

Allen Vorrichtungen ist gemeinsam, dass diese ein Gehäuse aufweisen, welches zumindest eine Kammer bildet, in der ein Ionenaustauschermaterial angeordnet ist. Es versteht sich, dass in dem Gehäuse noch weitere Bestandteile zur Wasseraufbereitung vorhanden sein können, beispielsweise Filter zur Entfernung von Schwebstoffen und/oder zur Zurückhaltung des Filtermaterial, oder Aktivkohle und/oder einen Ultrafilter zur Entkeimung des aufzubereitenden Wassers.

Das in dem Gehäuse vorhandene Ionenaustauschermaterial ist gemäß der Erfindung zumindest teilweise mit Zinkionen beladen. Es hat sich herausgestellt, dass in überraschend effektiver Weise eine zumindest Teilbeladung des Ionenaustauschermaterials mit Zinkionen verwendet werden kann, um das aufbereitete Wasser auf einen erwünschten Zinkanteil einzustellen.

Die Beladung mit Zinkionen bezieht sich im Sinne der Erfindung auf den Auslieferungs- also unbenutzten Zustand der Vorrichtung.

Vorzugsweise handelt es sich bei dem verwendeten Ionenaustauschermaterial um ein schwach saures Ionenaustauscherharz. Dies sind Materialien, bei denen keine vollständige Dissoziation stattfindet. Unter einem schwach sauren Ionenaustauschermaterial wird insbesondere ein Material verstanden, wie dieses in Hartinger, Ludwig "Handbuch der Abwasser- und Recyclingtechnik für die metallverarbeitende Industrie", Carl Hanser Verlag München, Wien 1991, verstanden wird. Danach verhalten sich schwach saure Ionenaustauschermaterialien wie schwache Säuren.

Insbesondere kann ein Ionenaustauscherharz verwendet werden, welches Carboxylgruppen umfasst. Ein derartiges Ionenaustauschermaterial ist beispielsweise unter der Bezeichnung Typ S8227 der Firma Lanxess verfügbar.

Das Ionenaustauschermaterial liegt vorzugsweise als Granulat vor. Gemäß einer alternativen Ausführungsform der Erfindung können aber auch faserförmige Ionenaustauschermaterialien verwendet werden.

Es versteht sich, dass alternativ zu einem schwach sauren Ionenaustauschermaterial auch die Verwendung eines stark sauren Ionenaustauschermaterials denkbar ist.

Vorzugsweise wird das Ionenaustauschermaterial mit Zinkionen beladen, indem dieses mit einer ein Zinksalz enthaltenden Suspension in Kontakt gebracht wird.

Gemäß der Erfindung ist das Ionenaustauschmaterial zu zumindest 5 %, besonders bevorzugt zu zumindest 10 % und ganz besonders bevorzugt zu zumindest 25 % seiner totalen Kapazität mit Zinkionen beladen.

Über die Beladung mit Zinkionen kann der Zinkgehalt im aufbereiteten Wasser mit überraschend hoher Genauigkeit eingestellt werden. Beim Aufbereiten von Wasser scheint es insbesondere zu einem Austausch von Kalziumionen im Wasser durch Zinkionen des Ionenaustauschers zu kommen.

Die totale Kapazität des Ionenaustauschermaterials sowie die Beladung mit der jeweiligen Ionenart im Sinne der Erfindung wird entsprechend der DIN 54403: 2009-04 bestimmt.

Entsprechend der in dieser Norm beschriebenen Bestimmung der totalen Kapazität über eine Beladung mit Wasserstoffionen kann auch die Beladung mit den einzelnen Ionenarten bestimmt werden.

Gemäß der Erfindung ist das Ionenaustauschmaterial auch mit Wasserstoffionen beladen, und zwar zu zumindest 5 %, besonders bevorzugt zu zumindest 10 % und ganz besonders bevorzugt zu zumindest 25 % seiner totalen Kapazität.

Es liegt also ein Ionenaustauschermaterial vor, welches teilweise mit Wasserstoffionen und teilweise mit Zinkionen beladen ist. Über die Wasserstoffionen kann vor allem eine gute Enthärtung des Trinkwassers erreicht werden.

Bei einer alternativen Ausführungsform der Erfindung, etwa zum Anreichern des Wassers mit Zinkionen, ist das Ionenaustauschermaterial überwiegend oder nahezu vollständig, also zu mehr als 90 %, mit Zinkionen beladen.

Bei einer weiteren Ausführungsform der Erfindung ist das Ionenaustauschermaterial auch mit Magnesiumionen beladen, insbesondere zu zumindest 0,5 %, vorzugsweise zu zumindest 5 %, besonders bevorzugt zu zumindest 10 % und ganz besonders bevorzugt zu zumindest 25 % seiner totalen Kapazität.

Es ist insbesondere vorgesehen, ein Ionenaustauschermaterial bereitzustellen, welches sowohl mit Zink, als auch mit Magnesium, als auch mit Wasserstoffionen beladen ist. Vorzugsweise beträgt die Beladung mit jeder einzelnen Ionenart mindestens 5 % der totalen Kapazität.

Bei der Ausführungsform, bei welcher das Ionenaustauschermaterial mit Magnesiumionen beladen ist, kann neben einer Einstellung des Zinkgehalts auch der Magnesiumgehalt des aufbereiteten Wassers eingestellt werden.

Denkbar ist auch eine Ausführungsform, bei welcher das Ionenaustauschermaterial nicht oder zu einem Anteil von weniger als 5 % mit Wasserstoff beladen ist.

Es hat sich herausgestellt, dass sowohl Magnesium als auch Zinkionen durch Kalziumionen des Wassers ausgetauscht werden. Im Unterschied zu beispielsweise Beladung mit Natrium wird ein seifiger Geschmack des Wassers verhindert und gleichzeitig das Wasser mit den Spurenelementen Magnesium und Natrium angereichert.

Die Beladung mit Zinkionen ist zumindest 5% und kann ganz besonders bevorzugt 5 bis 50 % der totalen Kapazität betragen.

Es versteht sich, dass bei Verwendung eines Ionenaustauschermaterials mit einer Zinkionenbeladung von unter 100 % der verbleibende Teil mit anderen Ionenarten beladen ist, insbesondere mit Wasserstoffionen, Magnesiumionen, Natriumionen oder Kaliumionen.

Neben der Verwendung eines Ionenaustauschermaterials, beispielsweise eines Granulats, bei welchem die einzelnen Partikel mit mehreren Ionenarten beladen sind, ist es gemäß einer Ausführungsform der Erfindung auch möglich, Ionenaustauschermaterialien zu mischen, welche unterschiedlich beladen sind.

Insbesondere ist es gemäß einer Ausführungsform einer Erfindung denkbar, ein überwiegend mit Zinkionen beladenes Ionenaustauschermaterial mit einem Ionenaustauschermaterial zu mischen, welches überwiegend mit Wasserstoffionen beladen ist und/oder mit einem Ionenaustauschermaterial zu mischen, welches überwiegend mit Magnesiumionen beladen ist.

Die Erfindung betrifft des Weiteren ein Verfahren zur Aufbereitung von Trinkwasser, insbesondere mittels der zuvor beschriebenen Vorrichtung. Dabei wird das Trinkwasser über ein mit Zinkionen und Wasserstoffionen beladenes Ionenaustauschermaterial geleitet.

Hierfür wird insbesondere das vorstehend beschriebene schwach saure Ionenaustauschermaterial mit den vorstehend genannten Beladungsanteilen verwendet.

So lässt sich das Trinkwasser auf einen Zinkgehalt von 20 bis 3000, vorzugsweise von 50 bis 2000 und besonders bevorzugt von 100 bis 1000 µg pro Liter einstellen.

Der Zinkgehalt kann des Weiteren durch eine teilweise Beladung des Ionenaustauschers mit einer anderen Ionenart, insbesondere mit Natrium, Kalium der Magnesiumionen eingestellt werden.

Weiter kann durch die Beladung mit Wasserstoff der pH-Wert des Trinkwassers durch die Beladung mit Zinkionen und eine optionale Beladung mit einer weiteren Ionenart (außer Wasserstoff) auf unter 7,5, vorzugsweise auf unter 7,0, eingestellt werden.

Über das Verhältnis von Zink und optional weiteren Ionenarten sowie Wasserstoff kann des Weiteren der pH-Wert auf über 6,0, vorzugsweise auf über 6,5, eingestellt werden.

Gleichzeitig kann dem aufbereiteten Wasser Kalzium entzogen werden und somit die Carbonathärte reduziert werden.

Die Erfindung betrifft des Weiteren ein Verfahren zur Beladung eines Ionenaustauschermaterials mit Zinkionen, insbesondere eines Ionenaustauschermaterials, welches für die vorstehend beschriebene Vorrichtung und das vorstehend beschriebene Verfahren verwendet wird.

Gemäß der Erfindung wird ein mit Wasserstoffionen beladenes Ionenaustauschermaterial mittels eines Zinksalzes zumindest teilweise mit Zinkionen beladen.

Das Ionenaustauschermaterial wird also gemäß der Erfindung zunächst in die Wasserstoffform überführt und sodann mittels eines Zinksalzes zumindest teilweise mit Zinkionen beladen.

Das Beladen mit Wasserstoff hat zum einen den Vorteil, dass das mit Wasserstoff beladene Ionenaustauschermaterial eine hohe Selektivität gegenüber Zink hat. Zum anderen ist das Ionenaustauschmaterial nach dem Beladen nur mit Wasserstoff und Zink beladen und ist frei von Natriumionen.

Als Zinksalz wird ein Zinkoxid oder Zinkcarbonat verwendet.

Erfindungsgemäß wird das Zinksalz als Suspension zugeführt, insbesondere mit einem mittleren Partikeldurchmesser von unter 100 pm. Es hat sich gezeigt, dass über die Verwendung mit nicht in Wasser löslichen Zinksalzen so eine Beladung mit Zink in überraschend effektiver Weise erzielt werden kann.

### Kurzbeschreibung der Zeichnungen

Der Gegenstand der Erfindung soll im Folgenden bezugnehmend auf schematisch dargestellte Ausführungsbeispiele anhand der Zeichnungen Fig. 1 bis Fig. 5 näher erläutert werden.
Fig. 1 ist eine perspektivische Ansicht eines Tischwasserfilters.
Fig. 2 ist eine aufgeschnittene Ansicht einer Kartusche mit einem Ionenaustauschermaterial.
Fig. 3 zeigt eine Filterkerze.
Fig. 4 zeigt schematisch die in den Tank einer Maschine zur Zubereitung von Getränken eingesetzte Kartusche.

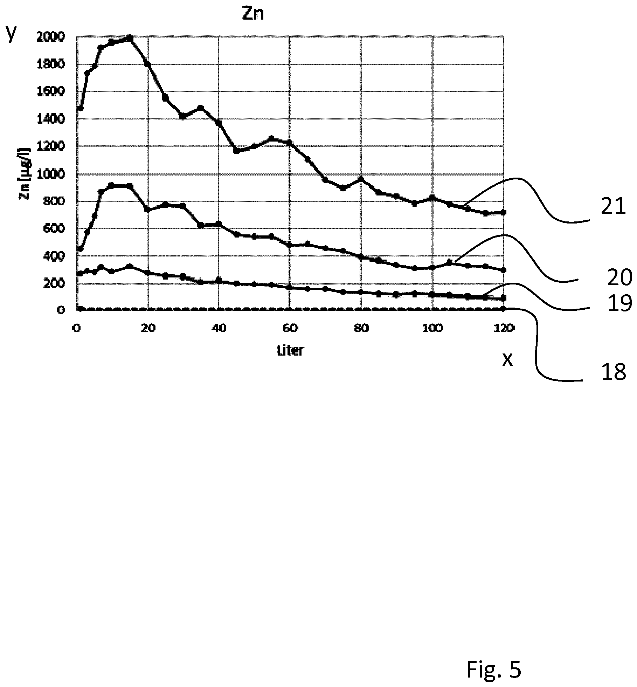

Bezugnehmend auf Fig. 5 soll die Abhängigkeit des Gehalts an Zink im Trinkwasser bei unterschiedlichen Beladungen des Ionenaustauschermaterials mit Zinkionen näher erläutert werden.

### Detaillierte Beschreibung der Zeichnungen

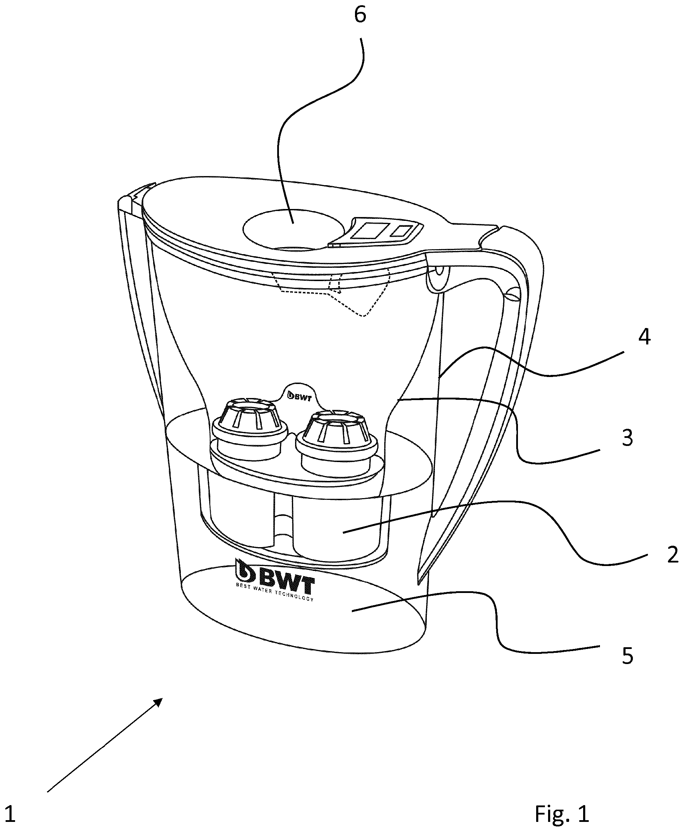

Fig. 1 zeigt in einer perspektivischen Ansicht einen Tischwasserfilter 1.

Es handelt sich dabei um eine schwerkraftbetriebene Wasseraufbereitungsvorrichtung, welche insbesondere im Haushalt verwendet wird.

Der Tischwasserfilter 1 umfasst eine Filterkartusche 2, die in einen Trichter 3 eingesetzt ist, der seinerseits in die Kanne 4 eingesetzt ist.

Über die Einfüllöffnung 6 kann Trinkwasser in den Trichter 3 eingefüllt werden, welches sodann die Kartusche 2 passiert und sich im Wassersammelraum 5 sammelt.

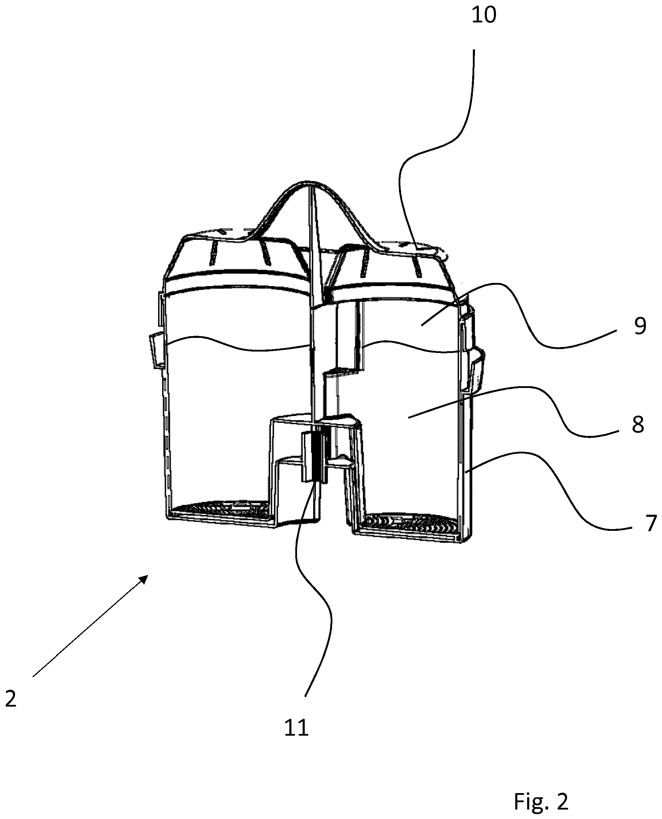

Fig. 2 zeigt eine aufgeschnittene Ansicht der in Fig. 1 dargestellten Kartusche 2.

Die Kartusche 2 umfasst ein Gehäuse 7, welches zumindest eine Kammer umfasst, die mit einem Ionenaustauschermaterial 8 befüllt ist.

Bei dem Ionenaustauschermaterial handelt es sich insbesondere um ein Granulat, welches Carboxylgruppen umfasst.

Weiter kann die Kammer 9 noch mit weiteren Wasseraufbereitungsmedien, insbesondere mit Aktivkohle (nicht dargestellt), befüllt sein.

Im Betrieb läuft über Einlauföffnungen 10 Wasser in die Kammer 9, passiert das Ionenaustauschermaterial und verlässt über den Auslauf 11 die Kartusche 2.

Es versteht sich, dass in Strömungsrichtung vor und/oder nach dem Ionenaustauschermaterial 8 noch Filter oder Netze zum Entfernen von Schwebstoffen und/oder zum Zurückhalten des Ionenaustauschermaterials 8 vorgesehen sein können (nicht dargestellt).

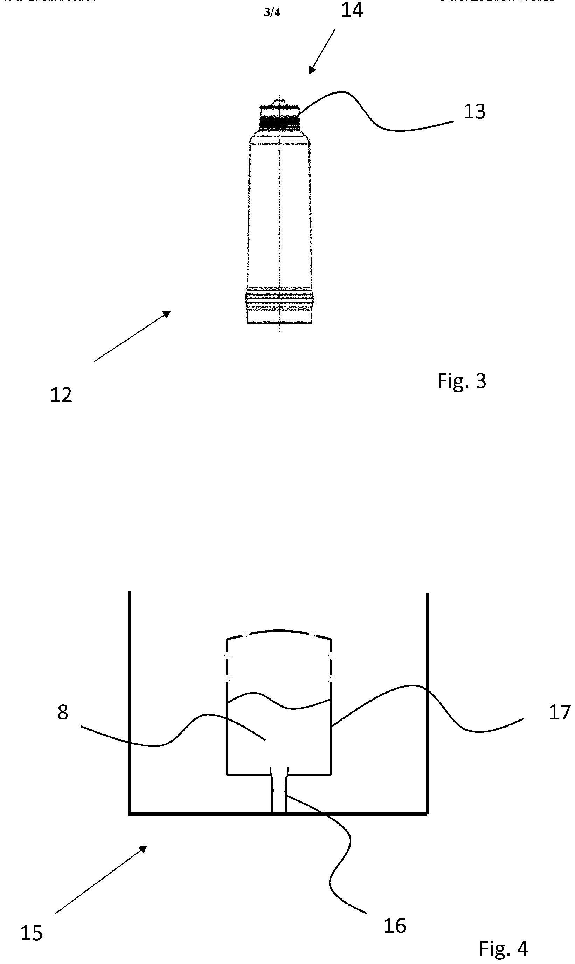

Fig. 3 zeigt eine alternative Ausführungsform einer Vorrichtung zur Aufbereitung von Trinkwasser, welche als Filterkerze 12 ausgebildet ist.

Eine derartige Filterkerze 12 wird im Gegensatz zu der zuvor beschriebenen Kartusche nicht aufgrund der Schwerkraft durchströmt, sondern wird über einen geeigneten Adapter an einer Trinkwasserleitung angeschlossen.

Hierzu umfasst die Filterkerze einen Kopf 14 mit einem Gewinde 13.

Der Kopf 14 umfasst Ein- und Auslauf. Über das Gewinde 13 kann die Filterkerze 12 leicht eingeschraubt werden. Der grundsätzliche Aufbau derartiger Filterkerzen ist dem Fachmann bekannt.

Fig. 4 zeigt schematisch dargestellt den Tank 15 einer Maschine zur Zubereitung von Getränken, insbesondere eines Automaten zur Zubereitung von Kaffee.

Der Tank 15 umfasst einen Ansaugstutzen 16, über welchen über eine Pumpe Wasser der Maschine zugeführt wird.

In den Ansaugstutzen 16 eingesteckt ist eine Filterkartusche 17, welche mit einem Ionenaustauschermaterial 8 befüllt ist, das entsprechend vorstehend beschriebener Ausführungsformen teilweise mit Zink beladen ist.

Bezugnehmend auf das Liniendiagramm gemäß Fig. 5 soll der Einfluss der Zinkbeladung auf den Zinkgehalt des aufbereiteten Trinkwassers näher erläutert werden.

Auf der x-Achse ist die Menge des mit der Kartusche aufbereiteten Wassers in Litern aufgetragen. Auf der y-Achse ist der Zinkgehalt des aufbereiteten Wassers in µg/l aufgetragen.

Die Kurve 18 zeigt den Zinkgehalt des verwendeten Trinkwassers, ohne dass dieses einer Wasseraufbereitung unterzogen wurde.

Zu erkennen ist, dass ein Wasser mit keinem nennenswerten Zinkgehalt verwendet wurde.

Bei Kurve 18 wurde ein schwach saures Ionenaustauscherharz verwendet, welches mit 0,06 mol Zn/l beladen wurde.

Das Ionenaustauschermaterial für das Wasser gemäß Kurve 20 wurde mit 0,19 mol Zn/l und das für Kurve 21 mit 0,36 mol Zn/l Harz beladen.

Zu erkennen ist, dass der Zinkanteil im Wasser mit überraschender Genauigkeit mit der Beladung des Ionenaustauschermaterials mit Zinkionen korreliert, d.h. die doppelte Beladung mit Zinkionen führt in etwa zu einem doppelten Anteil an Zink im aufbereiteten Wasser.

Weiter ist zu erkennen, dass die Beladung mit Zink zunächst mit der Menge des gefilterten Wassers stark ansteigt und sodann bis zum Erreichen einer aufbereiteten Menge von 120 l Wasser abnimmt.

Dies liegt daran, dass sich nach Einsetzen einer trockenen Kartusche Gleichgewichtsreaktionen erst einstellen müssen.

Sodann nimmt der Anteil an Zink im Wasser kontinuierlich ab, die Kartusche erschöpft sich und wird beispielsweise nach der hier vorgesehenen Aufbereitung von 120 l Wasser nicht weiterverwendet.

Durch die Erfindung kann auf einfache Weise Zink als wertvolles Spurenelement dem aufbereiteten Wasser hinzugefügt werden.

### Bezugszeichenliste

- 1: Tischwasserfilter
- 2: Kartusche
- 3: Trichter
- 4: Kanne
- 5: Wassersammelraum
- 6: Einfüllöffnung
- 7: Gehäuse
- 8: Ionenaustauschermaterial
- 9: Kammer
- 10: Einlauföffnung
- 11: Auslauf
- 12: Filterkerze
- 13: Gewinde
- 14: Kopf
- 15: Tank
- 16: Ansaugstutzen
- 17: Filterkartusche
- 18-21: Kurve

## Patentansprüche

1. Vorrichtung zur Aufbereitung von Trinkwasser, umfassend ein Gehäuse durch welches Wasser leitbar ist und welches mit einem Ionenaustauschermaterial befüllt ist, **dadurch gekennzeichnet, dass** das Ionenaustauschermaterial zu zumindest 5 % seiner totalen Kapazität mit Zinkionen und zu zumindest 5 % seiner totalen Kapazität mit Wasserstoffionen beladen ist.

2. Vorrichtung zur Aufbereitung von Trinkwasser nach dem vorstehenden Anspruch, **dadurch gekennzeichnet, dass** es sich bei dem Ionenaustauschermaterial um ein schwach saures Ionenaustauscherharz, insbesondere um ein Carboxylgruppen enthaltendes Harz handelt.

3. Vorrichtung zur Aufbereitung von Trinkwasser nach einem der vorstehenden Ansprüche, **dadurch gekennzeichnet, dass** das Ionenaustauschermaterial zu zumindest 10 % und bevorzugt zu zumindest 25 % seiner totalen Kapazität mit Zinkionen beladen ist.

4. Vorrichtung zur Aufbereitung von Trinkwasser nach einem der vorstehenden Ansprüche, **dadurch gekennzeichnet, dass** das Ionenaustauschermaterial zu zumindest 10 % und bevorzugt zu zumindest 25 % seiner totalen Kapazität mit Wasserstoffionen beladen ist.

5. Vorrichtung zur Aufbereitung von Trinkwasser nach einem der vorstehenden Ansprüche, **dadurch gekennzeichnet, dass** das Ionenaustauschermaterial auch mit Magnesiumionen beladen ist, insbesondere zu zumindest 0,5 %, vorzugsweise zu zumindest 5 %, besonders bevorzugt zu zumindest 10 % und ganz besonders bevorzugt zu zumindest 25 % seiner totalen Kapazität.

6. Vorrichtung zur Aufbereitung von Trinkwasser nach einem der vorstehenden Ansprüche, **dadurch gekennzeichnet, dass** das Ionenaustauschermaterial zu 5 bis 50 % seiner totalen Kapazität mit Zinkionen beladen ist.

7. Vorrichtung zur Aufbereitung von Trinkwasser nach einem der vorstehenden Ansprüche, **dadurch gekennzeichnet, dass** die Vorrichtung als werkzeuglos austauschbare Kartusche oder als Filterkerze ausgebildet ist.

8. Tischwasserfilter oder Tank einer Maschine zur Getränkezubereitung, umfassend eine Vorrichtung zur Aufbereitung von Trinkwasser nach einem der vorstehenden Ansprüche.

9. Verfahren zur Aufbereitung von Trinkwasser, insbesondere mit einer Vorrichtung zur Aufbereitung von Trinkwasser nach einem der vorstehenden Ansprüche, wobei das Trinkwasser über ein mit Zinkionen beladenes Ionenaustauschermaterial geleitet wird, wobei ein Ionenaustauschermaterial verwendet wird, welches teilweise mit Wasserstoff beladen ist, wobei der pH-Wert des Trinkwassers durch die Beladung mit Zinkionen und eine teilweise Beladung mit Wasserstoffionen auf unter 7,0 eingestellt wird.

10. Verfahren zur Aufbereitung von Trinkwasser nach dem vorstehenden Anspruch, **dadurch gekennzeichnet, dass** das Trinkwasser auf einen Zinkgehalt von 20 bis 3000, vorzugsweise von 50 bis 2000 und besonders bevorzugt von 100 bis 1000 µg/l eingestellt wird.

11. Verfahren zur Aufbereitung von Trinkwasser nach dem vorstehenden Anspruch, **dadurch gekennzeichnet, dass** der Zinkgehalt durch eine teilweise Beladung des Ionenaustauschers mit einer anderen Ionenart, insbesondere mit Natrium-, Kalium- oder Magnesiumionen eingestellt wird.

12. Verfahren zur Aufbereitung von Trinkwasser nach dem vorstehenden Anspruch, **dadurch gekennzeichnet**, das der pH-Wert des Trinkwassers durch die Beladung mit Zinkionen und eine optionale Beladung mit einer weiteren Ionenart auf über 6,0, vorzugsweise auf über 6,5 eingestellt wird.

13. Verfahren zur Beladung eines Ionenaustauschermaterials mit Zinkionen, insbesondere eines Ionenaustauschermaterials für eine Vorrichtung zur Aufbereitung von Trinkwasser nach einem der vorstehenden Ansprüche, **dadurch gekennzeichnet, dass** ein mit Wasserstoffionen beladenes Ionenaustauschermaterial mittels eines als Suspension zugeführten Zinksalzes zumindest teilweise mit Zinkionen beladen wird, wobei als Zinksalz ein Zinkoxid oder Zinkcarbonat verwendet wird.

## Claims

1. A device for treating drinking water, comprising a housing, through which water can be guided and which is filled with an ion exchange material, **characterized in that** at least 5% of the total capacity of the ion exchange material is loaded with zinc ions and at least 5% of its total capacity is loaded with hydrogen ions.

2. The device for treating drinking water according to the preceding claim, **characterized in that** the ion exchange material is a weakly acidic ion exchange material, in particular a resin containing carboxyl groups.

3. The device for treating drinking water according to any one of the preceding claims, **characterized in that** at least 10% and preferably at least 25% of the total capacity of the ion exchange material is loaded with zinc ions.

4. The device for treating drinking water according to any one of the preceding claims, **characterized in that** at least 10% and preferably at least 25% of the total capacity of the ion exchange material is loaded with hydrogen ions.

5. The device for treating drinking water according to any one of the preceding claims, **characterized in that** in particular at least 0.5%, preferably at least 5%, particularly preferably at least 10%, and most preferably at least 25% of the total capacity of the ion exchange material is also loaded with magnesium ions.

6. The device for treating drinking water according to any one of the preceding claims, **characterized in that** 5 to 50% of the total capacity of the ion exchange material is loaded with zinc ions.

7. The device for treating drinking water according to any one of the preceding claims, **characterized in that** the device is formed as cartridge or as filter candle, which can be exchanged without tools.

8. A table water filter or tank of a machine for beverage preparation, comprising a device for preparing drinking water according to any one of the preceding claims.

9. A method for preparing drinking water, in particular comprising a device for preparing drinking water according to any one of the preceding claims, wherein the drinking water is guided via an ion exchange material loaded with zinc ions, wherein an ion exchange material is used, which is partially loaded with hydrogen, wherein the pH value of the drinking water is set to below 7.0 by loading with zinc ions and a partial loading with hydrogen ions.

10. The method for preparing drinking water according to the preceding claim, **characterized in that** the drinking water is set to a zinc content of from 20 to 3000, preferably from 50 to 2000, and particularly preferably from 100 to 1000 µg/l.

11. The method for preparing drinking water according to the preceding claim, **characterized in that** the zinc content is set by means of a partial loading of the ion exchanger with a different ion type, in particular with sodium, potassium or magnesium ions.

12. The method for treating drinking water according to the preceding claim, **characterized in that** the pH value of the drinking water is set to above 6.0, preferably to above 6.5, by means of the loading with zinc ions and an optional loading with a further ion type.

13. A method for loading an ion exchange material with zinc ions, in particular an ion exchange material for a device for treating drinking water according to any one of the preceding claims, **characterized in that** an ion exchange material loaded with hydrogen ions is at least partially loaded with zinc ions by means of a zinc salt, which is supplied as suspension, wherein a zinc oxide or zinc carbonate is used as zinc salt.

## Revendications

1. Dispositif pour la préparation d'eau potable, comprenant un boîtier par lequel de l'eau peut être acheminée et lequel est rempli d'un matériau échangeur d'ions, **caractérisé en ce que** le matériau échangeur d'ions est chargé en ions de zinc pour au moins 5% de sa capacité totale et en ions d'hydrogène pour au moins 5% de sa capacité totale.

2. Dispositif pour la préparation d'eau potable conformément à la revendication précédente, **caractérisé en ce que** le matériau échangeur d'ions est une résine échangeuse d'ions faiblement acide, en particulier une résine contenant des groupes carboxyle.

3. Dispositif pour la préparation d'eau potable conformément à l'une des revendications précédentes, **caractérisé en ce que** le matériau échangeur d'ions est chargé en ions de zinc pour au moins 10% et préférablement pour au moins 25% de sa capacité totale.

4. Dispositif pour la préparation d'eau potable conformément à l'une des revendications précédentes, **caractérisé en ce que** le matériau échangeur d'ions est chargé en ions d'hydrogène pour au moins 10% et préférablement pour au moins 25% de sa capacité totale.

5. Dispositif pour la préparation d'eau potable conformément à l'une des revendications précédentes, **caractérisé en ce que** le matériau échangeur d'ions est également chargé en ions de magnésium, en particulier pour au moins 0,5%, préférablement pour au moins 5%, plus préférablement pour au moins 10% et le plus préférablement pour au moins 25% de sa capacité totale.

6. Dispositif pour la préparation d'eau potable conformément à l'une des revendications précédentes, **caractérisé en ce que** le matériau échangeur d'ions est chargé en ions de zinc pour 5 à 50% de sa capacité totale.

7. Dispositif pour la préparation d'eau potable conformément à l'une des revendications précédentes, **caractérisé en ce que** le dispositif est conçu comme cartouche interchangeable sans outil ou comme bougie filtrante.

8. Filtre pour eau de table ou réservoir d'une machine pour la préparation de boissons, comprenant un dispositif pour la préparation d'eau potable conformément à l'une des revendications précédentes.

9. Procédé pour la préparation d'eau potable, en particulier avec un dispositif pour la préparation d'eau potable conformément à l'une des revendications précédentes, l'eau potable étant acheminée par un matériau échangeur d'ions chargé en ions de zinc, un matériau échangeur d'ions qui est partiellement chargé en hydrogène étant utilisé, la valeur du pH de l'eau potable étant définie en dessous de 7,0 par la charge en ions de zinc et une charge partielle en ions d'hydrogène.

10. Procédé pour la préparation d'eau potable conformément à la revendication précédente, **caractérisé en ce que** l'eau potable est définie avec une teneur en zinc de 20 à 3000, préférablement de 50 à 2000 et très préférablement de 100 à 1000 µg/l.

11. Procédé pour la préparation d'eau potable conformément à la revendication précédente, **caractérisé en ce que** la teneur en zinc est définie par une charge partielle de l'échangeur d'ions avec un autre type d'ions, en particulier des ions de sodium, de potassium ou de magnésium.

12. Procédé pour la préparation d'eau potable conformément à la revendication précédente, **caractérisé en ce que** la valeur du pH de l'eau potable est définie au-dessus de 6,0, préférablement au-dessus de 6,5, par la charge en ions de zinc et une charge facultative d'un autre type d'ions.

13. Procédé pour la charge d'un matériau échangeur d'ions en ions de zinc, en particulier d'un matériau échangeur d'ions pour un dispositif pour la préparation d'eau potable conformément à l'une des revendications précédentes, **caractérisé en ce qu'**un matériau échangeur d'ions chargé en ions d'hydrogène est chargé au moins partiellement en ions de zinc au moyen d'un sel de zinc amené en suspension, un oxyde de zinc ou un carbonate de zinc étant utilisé comme sel de zinc.
